# EUROPÄISCHE PATENTSCHRIFT

(11) **EP 3 899 284 B1**
(45) Veröffentlichungstag und Bekanntmachung des Hinweises auf die Patenterteilung: **10.01.2024**
(21) Anmeldenummer: 19804681.5
(22) Anmeldetag: 12.11.2019
(51) Int. Cl.: F04D 23/00, F04D 29/40, F04D 29/02, F04D 25/06

(54) **SEITENKANALVERDICHTER FÜR EIN BRENNSTOFFZELLENSYSTEM ZUR FÖRDERUNG UND/ODER VERDICHTUNG EINES GASFÖRMIGEN MEDIUMS**
SIDE-CHANNEL COMPRESSOR FOR A FUEL CELL SYSTEM FOR CONVEYING AND/OR COMPRESSING A GASEOUS MEDIUM
COMPRESSEUR À CANAL LATÉRAL POUR SYSTÈME DE PILE À COMBUSTIBLE, PERMETTANT LE TRANSPORT ET/OU LA COMPRESSION D'UN FLUIDE GAZEUX

(30) Priorität: 18.12.2018 DE 102018222102
(43) Veröffentlichungstag der Anmeldung: 27.10.2021
(73) Patentinhaber: Robert Bosch GmbH, 70442 Stuttgart (DE)
(72) Erfinder: KURZ, Michael, 73207 Plochingen (DE)
(86) Internationale Anmeldenummer: PCT/EP2019/080960
(87) Internationale Veröffentlichungsnummer: WO 2020/126220

(56) Entgegenhaltungen:
- DE-A1-102015 202 946
- DE-A1-102015 224 603
- US-A- 3 844 674
- US-A- 6 036 456
- US-A1- 2007 147 983

## Beschreibung

Die vorliegende Erfindung betrifft einen Seitenkanalverdichter für ein Brennstoffzellensystem zur Förderung und/oder Verdichtung eines gasförmigen Mediums, insbesondere Wasserstoff, das insbesondere zur Anwendung in Fahrzeugen mit einem Brennstoffzellenantrieb vorgesehen ist.

Im Fahrzeugbereich spielen neben flüssigen Kraftstoffen in Zukunft auch gasförmige Kraftstoffe eine zunehmende Rolle. Insbesondere bei Fahrzeugen mit Brennstoffzellenantrieb müssen Wasserstoffgasströme gesteuert werden. Die Gasströme werden hierbei nicht mehr diskontinuierlich, wie bei der Einspritzung von flüssigem Kraftstoff gesteuert, sondern es wird das gasförmige Medium aus mindestens einem Hochdrucktank entnommen und über eine Zuströmleitung eines Mitteldruckleitungssystem an eine Ejektoreinheit geleitet. Diese Ejektoreinheit führt das gasförmige Medium über eine Verbindungsleitung eines Niederdruckleitungssystems zu einer Brennstoffzelle. Nachdem das gasförmige Medium durch die Brennstoffzelle geströmt ist wird es über eine Rückführleitung zurück zur Ejektoreinheit geführt. Dabei kann der Seitenkanalverdichter zwischengeschaltet werden, der die Gasrückführung strömungstechnisch und effizienztechnisch unterstützt. Zudem werden Seitenkanalverdichter zur Unterstützung des Strömungsaufbaus im Brennstoffzellenantrieb eingesetzt, insbesondere bei einem (Kalt)-Start des Fahrzeugs nach einer gewissen Standzeit. Das Antreiben dieser Seitenkanalverdichter erfolgt üblicherweise über Elektromotoren, die beim Betrieb in Fahrzeugen über die Fahrzeugbatterie mit Spannung versorgt werden.

Aus der DE 10 2007 053 016 A1 ist ein Seitenkanalverdichter für ein Brennstoffzellensystem bekannt, bei dem ein gasförmiges Medium, insbesondere Wasserstoff, gefördert und/oder verdichtet wird. Der Seitenkanalverdichter weist ein in einem Gehäuse umlaufendes Verdichterrad auf, das auf einer Antriebswelle befestigt ist und von einem Antrieb in Rotation versetzt wird und somit drehbar um eine Drehachse angeordnet ist. Weiterhin weist der Seitenkanalverdichter einen in dem Gehäuse befindlichen Verdichterraum auf, der mindestens einen umlaufenden Seitenkanal aufweist. Das Verdichterrad weist dabei an seinem Umfang im Bereich des Verdichterraums angeordnete Förderzellen auf. Im Gehäuse ist zudem jeweils eine Gas-Einlassöffnung und eine Gas-Auslassöffnung angeordnet, die über den mindestens einen Seitenkanal fluidisch miteinander verbunden sind. Dabei weist das Gehäuse eine erste und eine zweite dem Verdichterrad zugewandte Spaltfläche auf, die jeweils radial zur Drehachse verlaufen. In diesen Bereichen bildet sich jeweils ein innerer und ein äußerer Axialspalt zwischen dem Gehäuse und dem Verdichterrad aus.

Die US 2007/147983 offenbart einen Seitenkanalverdichter geeignet für ein Brennstoffzellensystem zur Förderung und/oder Verdichtung eines gasförmigen Mediums, insbesondere Wasserstoff.

Aus der US 6 036 456 A ist eine elektrische Luftpumpe für eine Vorrichtung zum Spülen einer Aktivkohlefalle und ggf. zur zeitweiligen Dichtheitsprüfung einer mit dieser verbundenen Brennstofftankanlage einer Fahrzeug-Brennkraftmaschine.

Die DE 10 2015 202 946 A1 offenbartbetrifft eine Pumpvorrichtung zum Antreiben von Blow-by-Gas in einer Kurbelgehäuseentlüftungseinrichtung umfassend einen Seitenkanalverdichter mit einem Gehäuse, das einen Förderraum, einen Fluideinlass und einen Fluidauslass aufweist

Die aus der DE 10 2007 053 016 A1, der US 2007/147983 , der US 6 036 456 A und der DE 10 2015 202 946 A1 bekannten Seitenkanalverdichter und/oder Vorrichtungen können gewisse Nachteile aufweisen. Bei der Verwendung des Seitenkanalverdichters, insbesondere als Rezirkulationsgebläse, ist das Gehäuse, das insbesondere aus einem Gehäuse-Oberteil und einem Gehäuse-Unterteil bestehen kann, aus einem Gussmaterial hergestellt, um zum einen eine Beständigkeit gegen das zu fördernde gasförmige Medium im Bereich des Verdichterraums zu gewährleisten und um zum anderen in funktionalen Bereichen, in denen eine hohe Festigkeit des Gehäuses erforderlich ist, wie beispielsweise der Lageraufnahme, eine hohe Lebensdauer gewährleisten zu können. Dabei muss jedoch das gesamte Gehäuse aus dem Gussmaterial hergestellt sein, um an der der Umgebung zugewandten Oberfläche die aufwendigen und/oder komplexen Strukturen, wie beispielsweise Kühlrippen, ausbilden zu können. Somit sind zum einen die Herstellkosten des Gehäuses entsprechend hoch. Die hohen Herstellkosten setzen sich dabei wie folgt zusammen: hohe Rohmaterial-Kosten des Gussmaterials und/oder hohe Energiekosten bei der Herstellung, insbesondere bei einem Gießprozess, des Verdichterrads als Gussteil und/oder hohe Bearbeitungskosten bei der Nachbearbeitung des Verdichterrads, wie beispielsweise eine spanende und/oder schleifende Nachbearbeitung. Zum anderen weisen die aus der DE 10 2007 053 016 A1 , der US 2007/147983 , der US 6 036 456 A und der DE 10 2015 202 946 A1 bekannten Seitenkanalverdichter und/oder Vorrichtungen den Nachteil auf, dass das Gewicht des Gehäuses hoch ist und somit auch das resultierende Gesamtgewicht des Seitenkanalverdichters und/oder der Vorrichtungen.

Weiterhin weisen die aus der DE 10 2007 053 016 A1, der US 2007/147983 , der US 6 036 456 A und der DE 10 2015 202 946 A1 bekannte Seitenkanalverdichter und/oder Vorrichtungen die Nachteile auf, dass bei der Verwendung des Verdichterrads, das insbesondere als einstückiges Gussteil ausgebildet ist, die Herstellkosten des Verdichterrads entsprechend hoch sein. Die hohen Herstellkosten setzen sich dabei wie folgt zusammen: hohe Rohmaterial-Kosten des Gussmaterials und/oder hohe Energiekosten bei der Herstellung, insbesondere bei einem Gießprozess, des Verdichterrads als Gussteil und/oder hohe Bearbeitungskosten bei der Nachbearbeitung des Verdichterrads, wie beispielsweise eine spanende und/oder schleifende Nachbearbeitung.

Ein weiterer Nachteil der aus der DE10 2007 053 016 A1 der US 2007/147983 , der US 6 036 456 A und der DE 10 2015 202 946 A1 bekannte Seitenkanalverdichter und/oder Vorrichtungen ist die hohe Maße des aus dem Gussmaterial hergestellten Verdichterrads. Insbesondere bei einem häufigen Anfahren und Abbremsen des Seitenkanalverdichters muss das Verdichterrad fortwährend derart beschleunigt und/oder abgebremst werden, dass es eine entsprechende Drehzahl aufbaut und/oder abbaut. Bei der Verwendung des Verdichterrads aus Gussmaterial ist aufgrund der Masse des Gussmaterials hierzu ein entsprechend hoher Energieaufwand des Antriebs notwendig, insbesondere in Form von elektrischer Energie, was wiederum zu erhöhten Betriebskosten des Seitenkanalverdichters führt.

### Offenbarung der Erfindung

### Vorteile der Erfindung

Erfindungsgemäß wird ein Seitenkanalverdichter für ein Brennstoffzellensystem zur Förderung und/oder Verdichtung von einem gasförmigen Medium, insbesondere Wasserstoff, mit den Merkmalen der unabhängigen Patentansprüche bereitgestellt.

Bezugnehmend auf Anspruch 1 weist weist das Gehäuse des Seitenkanalverdichters einen Aufnahme-Deckel auf, der scheibenförmig umlaufend um eine Drehachse ausgeführt und aus einem metallischen Werkstoff hergestellt ist. Der Aufnahme-Deckel weist dabei an seinem Außendurchmesser einen um die Drehachse umlaufenden ersten zylindrischen Ansatz auf, wobei der erste zylindrische Ansatz mit einer ersten Stirnfläche mit einer zweiten Stirnfläche des Gehäuse-Unterteils in Richtung der Drehachse in Anlage steht. Auf diese Weise kann für die Herstellung des Gehäuses in diesem Bereich einfaches metallisches Stangenmaterial oder einfache Drehteile verwendet werden, wodurch teuren Metallguss-Verfahren obsolet werden. Dabei können die Materialkosten, insbesondere die Rohmaterialkosten, gegenüber einem Gehäuse aus einem Gussmaterial, insbesondere Aluminiumguss deutlich reduziert werden. Dies ist dadurch begründet, dass für die Herstellung von Stangenmaterial weniger Energie, insbesondere elektrische Energie, aufgewendet werden muss, als bei einer separaten Ausformung des Gehäuses und/oder des jeweiligen Bauteils mittels eines Gießverfahrens. Des Weiteren lassen sich somit die Herstellkosten des gesamten Seitenkanalverdichters und/oder das Gewicht des gesamten Seitenkanalverdichters reduzieren, ohne die Zuverlässigkeit und Lebensdauer des Seitenkanalverdichters nachteilig zu beeinflussen.

Durch die in den Unteransprüchen aufgeführten Maßnahmen sind vorteilhafte Weiterbildungen des im Anspruch 1 angegebenen Seitenkanalverdichters möglich. Die Unteransprüche betreffen bevorzugte Weiterbildungen der Erfindung.

Gemäß einer vorteilhaften Weiterbildung weist das Verdichterrad eine um die Drehachse umlaufende Nabenscheibe auf. Die Nabenscheibe steht mit einer dritten Stirnfläche an einer vierten Stirnfläche eines Mitnahme-Flansches, der insbesondere nahezu vollständig aus einem metallischen Werkstoff besteht, in Richtung der Drehachse zumindest in Anlage. Zudem kann die Nabenscheibe mit dem Mitnahme-Flansch mittels einer formschlüssigen und/oder kraftschlüssigen und/oder einer stoffschlüssigen Verbindung verbunden sein. Dabei verlaufen die Stirnflächen zumindest nahezu deckungsgleich zueinander. Zudem können die Bauteile Aufnahme-Deckel und Mitnahme-Flansch einen nahezu gleichen Wärmeausdehnungskoeffizienten aufweisen. Auf diese Weise lässt sich der Vorteil erzielen, dass eine Trennlinie, die nahezu orthogonal zur Drehachse verläuft, ausgebildet wird. Dabei liegt die Kontaktfläche zwischen der Nabenscheibe des Verdichterrads aus Kunststoff und des metallischen Mitnahme-Flanschs auf dieser Trennlinie. Zudem liegt die Kontaktfläche zwischen dem metallischen Aufnahme-Deckel und dem Gehäuse-Unterteil aus Kunststoff auf der Trennlinie. Somit lässt sich der Vorteil erzielen, dass sich ein erstes funktionsrelevantes Spaltmaß und/oder ein zweites funktionsrelevantes Spaltmaß zwischen dem Verdichterrad und dem Gehäuse, auch bei einem Durchlaufen von sehr niedrigen zu sehr hohen Betriebstemperaturen, insbesondere -30°C bis + 100°C nicht verkleinert oder vergrößert. Auf diese Weise lässt sich der Vorteil erzielen, dass es nicht zu einer derartigen Erweiterung der funktionsrelevanten Spaltmaße kommt, dass eine pneumatische Kapselung und/oder Trennung mindestens eines Seitenkanals oder von einem ersten und einem zweiten Seitenkanal aufgehoben wird. Zudem wird vermieden, dass sich das jeweilige funktionsrelevante Spaltmaß derart verkleinert, dass es zu einer Kollision zwischen dem Gehäuse und dem Verdichterrad kommt, was zu einem Ausfall des Seitenkanalverdichters führen könnte. Somit lässt sich die Zuverlässigkeit und/oder der Wirkungsgrad des Seitenkanalverdichters erhöhen oder zumindest beibehalten, auch beim Durchlaufen eines breiten Temperaturbereichs.

Gemäß einer besonders vorteilhaften Ausgestaltung des Seitenkanalverdichters weist der Aufnahme-Deckel einen zylindrischen Lagerzapfen auf, wobei der Lagerzapfen derart in Richtung der Drehachse verläuft, dass seine Mantelfläche umlaufend um die Drehachse verläuft und wobei ein erstes Lager und/oder ein zweites Lager radial zur Drehachse mit der Mantelfläche des Lagerzapfens in Kontakt stehen. Auf diese Weise kann eine Aufnahme des ersten und/oder des zweiten Lagers in den Bereich des Gehäuses verlagert werden, der aus einem metallischen Werkstoff besteht und somit höhere Festigkeitswerte gegenüber Kunststoff aufweist. Dabei weist eine gehäuseseitige Lageraufnahmefläche mit einer höheren Festigkeit, wie beispielsweise bei der Verwendung von metallischen Werkstoffen, Vorteile hinsichtlich der Lebensdauer gegenüber einer gehäuseseitigen Lageraufnahmefläche mit einer niedrigeren Festigkeit, wie beispielsweise bei der Verwendung von Kunststoff auf. Somit kann die Lebensdauer des mindestens einen Lagers und/oder des jeweiligen aufnehmenden Bauteils des Seitenkanalverdichters erhöht werden, wodurch die Ausfallwahrscheinlichkeit des Seitenkanalverdichters verringert werden kann.

Gemäß einer vorteilhaften Weiterbildung ist der Antrieb als ein Axialfeld-Elektromotor ausgeführt, der einen Stator und einen Rotor aufweist. Dabei sind der Stator und der Rotor scheibenförmig umlaufend um die Drehachse ausgebildet und der Stator ist in Richtung der Drehachse neben dem Rotor angeordnet. Auf diese Weise lässt sich der Vorteil erzielen, dass der Antrieb als eine in Richtung der Drehachse schmalere Komponente, insbesondere im Vergleich zu einem aus dem Stand der Technik bekannten Antrieb mit einer Antriebswelle, umgesetzt werden kann, die aufgrund Ihres Durchmessers zwar viel Bauraum radial zur Drehachse benötigt, jedoch axial zur Drehachse schmal ausgeführt ist und somit axial zur Drehachse wenig Bauraum benötigt. Die weiteren Komponenten des Seitenkanalverdichters, insbesondere das Gehäuse und das Verdichterrad, sind gleichartig als in Richtung der Drehachse schmale Komponenten umgesetzt, die aufgrund Ihrer Durchmesser zwar viel Bauraum radial zur Drehachse benötigen, jedoch axial zur Drehachse schmal ausgeführt sind und somit axial zur Drehachse wenig Bauraum benötigen. Dies ist zudem vorteilhaft bei der Integration des Seitenkanalverdichters in einer Anodenplatte einer Brennstoffzelle. Bei einer Kombination des Antriebs mit den weiteren Komponenten des Seitenkanalverdichters, insbesondere dem Gehäuse und dem Verdichterrad, werden somit Komponenten mit gleichartige Bauraumausprägungen kombiniert, wodurch sich einen kompakte und platzsparende Bauweise des gesamten Seitenkanalverdichters erzielen lässt. Dabei ist die kompakte und platzsparende Bauweise des Seitenkanalverdichters durch eine möglichst geringe Oberfläche im Verhältnis zum Volumen realisiert. Dies bietet den Vorteil, dass nur ein geringer Einbauraum beim Kunden benötigt wird, beispielsweise in einem Gesamt-Fahrzeug. Des Weiteren bietet die kompakte Bauweise des Seitenkanalverdichters, insbesondere mit einer möglichst geringen Oberfläche im Verhältnis zum Volumen, thermische Vorteile bei einem Kaltstart des Seitenkanalverdichters.

Gemäß einer besonders vorteilhaften Weiterbildung ist der Rotor als ein Permanentmagnet ausgeführt, der in Richtung der Drehachse mit dem Mitnahme-Flansch in Kontakt steht und/oder mit dem Mitnahme-Flansch verbunden ist, insbesondere mittels einer formschlüssigen und/oder kraftschlüssigen und/oder einer stoffschlüssigen Verbindung. Auf diese Weise lässt sich der Vorteil erzielen das der Antrieb in einer kompakten und platzsparenden Weise in dem Seitenkanalverdichter integriert werden kann und der Seitenkanalverdichter in Richtung der Drehachse eine geringe Breite und/oder einen geringen Bauraum aufweist. Zudem ermöglicht die erfindungsgemäße Ausgestaltung des Rotors eine Vormontage der Baugruppe Verdichterrad mit den Bauteilen Mitnahme-Flansch und Rotor, wodurch sich die Montagekosten des Seitenkanalverdichters reduzieren lassen.

Gemäß einer vorteilhaften Ausgestaltung verläuft ein erster Spalt in Richtung der Drehachse zwischen einer fünften Stirnfläche des Aufnahme-Deckels und einer sechsten Stirnfläche des Gehäuse-Unterteils. Auf diese Weise kann der Vorteil erzielt werden, dass zum einen der Aufnahme-Deckel nicht mit den Bauteilen aus Kunststoff in Kontakt kommt und/oder es zu einer Verspannung der Bauteile untereinander kommt, trotz eines unterschiedlichen Wärmeausdehnungskoeffizienten. Dies ist insbesondere beim Durchlaufen eines breiten Temperaturbereichs zwischen -40°C und 100°C. Somit lässt sich eine Schädigung der Bauteile aus Kunststoff und/oder der Bauteile aus dem metallischen Werkstoff verhindern, wodurch sich Zuverlässigkeit und/oder Lebensdauer des Seitenkanalverdichters erhöhen lässt, auch beim Durchlaufen eines weiten Temperaturbereichs.

Gemäß einer vorteilhaften Weiterbildung weist das Gehäuse-Oberteil eine durchgehende Wandung auf, die sich zwischen einem Stator-Raum und einem Rotor-Raum befindet und eine fluidische Trennung dieser bewirkt. Auf diese Weise kann eine Kapselung zum einen des Rotor-Raums vom Stator-Raum erfolgen, aber zum anderen eine zusätzliche Kapselung des Rotor-Raums von der Umgebung. Dabei wird verhindert, dass ein Austausch von Flüssigkeiten und/oder Verschmutzungen zwischen dem Rotor-Raums und/oder dem Stator-Raum und/oder der Umgebung erfolgt. Dabei wird der Vorteil erzielt, dass beispielsweise ein Kurzschluss durch Flüssigkeitseintrag im Stator-Raum vermieden werden kann, da sich alle elektrischen Bauteile, wie beispielsweise die Magnetspule, innerhalb des gekapselten Stator-Raums befinden und somit gegen Flüssigkeit geschützt sind. Dadurch lässt sich eine verbesserte Kapselung der elektrischen Bauteile des Seitenkanalverdichters und/oder des Stator-Raums und/oder des Rotor-Raums erzielen und somit kann die Lebensdauer erhöht werden. Zudem kann mittels der Verwendung der durchgehenden Wandung der Stator zumindest teilweise im Gehäuse integriert werden, so dass sich der Vorteil einer kompakten und platzsparenden Bauweise des Seitenkanalverdichters ergibt.

Gemäß einer besonders vorteilhaften Weiterbildung befindet sich ein erstes Dichtelement zwischen dem Aufnahme-Deckel und dem Gehäuse-Unterteil insbesondere im Bereich eines Absatzes des Aufnahme-Deckels und/oder es befindet sich ein zweites Dichtelement zwischen dem Gehäuse-Oberteil, insbesondere einer siebten Stirnfläche, und dem Gehäuse-Unterteil, insbesondere einer achten Stirnfläche. Zudem ist ein Statorgehäuse am Gehäuse-Oberteil angebracht, das eine fluidische Kapselung des Stator-Raums des Antriebs bewirkt, wobei sich der Stator-Raum in Richtung der Drehachse vorzugsweise zumindest nahezu vollständig im Gehäuse-Oberteil befindet. Auf diese Weise kann eine verbesserte Kapselung des Seitenkanalverdichters erzielt werden, insbesondere des Rotor-Raums und/oder des Stator-Raums, indem ein Eindringen von Flüssigkeit und/oder Verschmutzung aus einem Bereich außerhalb des Seitenkanalverdichters verhindert oder zumindest reduziert wird. Somit werden zum einen Bereiche mit elektrischen Bauteilen, bei denen ein Eindringen von Flüssigkeit zum Kurzschluss und/oder einer Oxidation der beispielsweise metallischen Bauteile führen kann, gegen Flüssigkeit und Schmutz besser gekapselt. Zum anderen wird der Bereich mit beweglichen Bauteilen, insbesondere der Rotor-Raum, besser gegen Verschmutzung gekapselt, wobei beispielsweise die beweglichen Bauteile derart geschädigt werden können, dass sich harte Schmutzpartikel zwischen diese Bauteile legen und die Oberflächen dieser Bauteile schädigen und/oder die Bewegung dieser Bauteile blockieren, was zu einem Ausfall des gesamten Seitenkanalverdichters führen kann. Weiterhin können beim Eindringen von Flüssigkeit in den Bereich des Rotor-Raums und bei niedrigen Temperaturen, insbesondere von unter 0°C, sogenannte Eisbrücken zwischen den beweglichen Bauteilen ausbilden und diese entweder beschädigen und/oder blockieren.

Gemäß einer vorteilhaften Ausgestaltung fixieren mindestens zwei Verschraubungselemente das Gehäuse-Oberteil an dem Gehäuse-Unterteil und das Gehäuse-Unterteil an dem Aufnahme-Deckel. Auf diese Weise kann eine kostengünstige Verbindung des Gehäuse-Oberteils an dem Gehäuse-Unterteil und/oder des Gehäuse-Unterteil an dem Aufnahme-Deckel erzielt werden. Darüber hinaus kann die Ausfallwahrscheinlichkeit des Verbindung mittels der mindestens zwei Verschraubungselemente herbeigeführt werden. Des Weiteren kann eine schnellere Montage und Demontage erzielt werden, da sich die Verschraubungselemente schnell montieren lassen und da eine einfache und zerstörungsfreie Demontage mittels Standardwerkszeugen möglich ist, wodurch sich die Montagekosten und/oder die Wartungskosten reduzieren lassen.

Gemäß einer besonders vorteilhaften Ausgestaltung wird das Gehäuse-Oberteil und/oder das Gehäuse-Unterteil mittels eines Gießverfahrens hergestellt, insbesondere mittels eines Spritzgussverfahrens. Auf diese Weise kann eine kostengünstige Herstellung des Gehäuse-Oberteil und/oder des Gehäuse-Unterteil herbeigeführt werden, da ein kostengünstiges Material wie Kunststoff verwendet wird. Weiterhin vorteilhaft ist die schnelle Ausformzeit und Abkühlzeit des Bauteils aufgrund des Spritzguss-Prozesses, wodurch sich die Herstellkosten, inbesondere aufgrund von Stückzahleffekten, weiter verringern lassen. Somit können die Gesamtkosten des Seitenkanalverdichters weiter reduziert werden. Ein weiterer Vorteil der erfindungsgemäßen Ausgestaltung des Gehäuse-Oberteil und/oder das Gehäuse-Unterteil liegt in der Abbildbarkeit von hochkomplexen Formen und/oder Oberflächen des jeweiligen Bauteils.

### Kurze Beschreibung der Zeichnung

Anhand der Zeichnung wird die Erfindung nachstehend eingehender beschrieben.

Es zeigt:

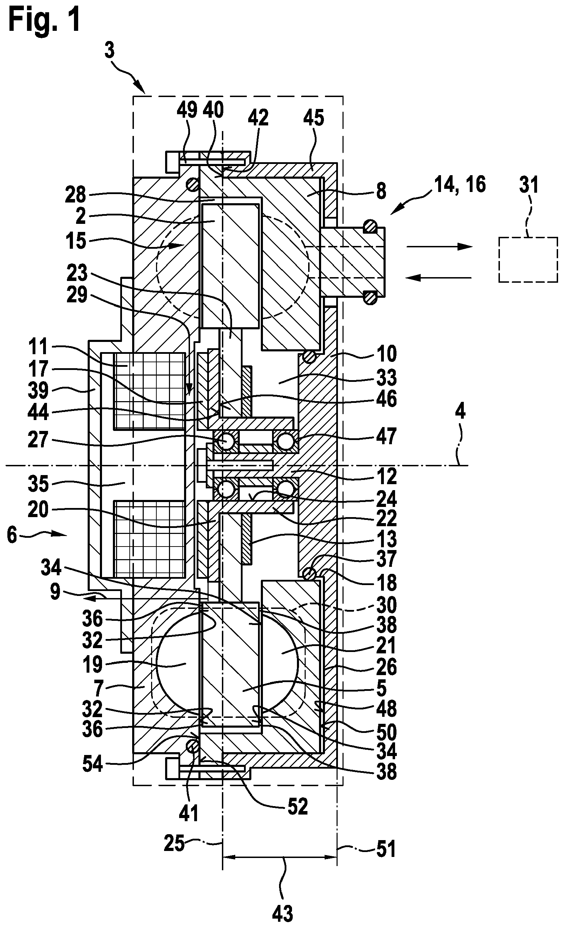

- Figur 1: eine schematische Schnittansicht eines erfindungsgemäßen Seitenkanalverdichters,

### Beschreibung des Ausführungsbeispiels

Der Darstellung gemäß **Fig.** 1 ist eine schematische Schnittansicht eines erfindungsgemäßen Seitenkanalverdichters 1 zu entnehmen.

Dabei ist in **Fig.** 1 gezeigt, dass der Seitenkanalverdichter 1 ein Gehäuse 3 aufweist, wobei sich in dem Gehäuse 3 ein Verdichterrad 2 befindet, das drehbar um eine Drehachse 4 angeordnet und zumindest mittelbar durch einen Antrieb 6 angetrieben ist. Dabei weist das Verdichterrad 2 an seinem Umfang im Bereich eines Verdichterraums 30 angeordnete Förderzellen 5 auf. Zudem weist das Gehäuse 3 eine Gas-Einlassöffnung 14 und eine Gas-Auslassöffnung 16 auf, die über den Verdichterraum 30, insbesondere dem mindestens einen Seitenkanal 19, 21 fluidisch miteinander verbunden sind. Dabei ist der Seitenkanalverdichter 1 mittels der Gas-Einlassöffnung 14 und/oder der Gas-Auslassöffnung 16 mit einem Brennstoffzellensystem 31 verbunden, wobei der Seitenkanalverdichter 1 insbesondere als Komponente eines Anodenkreislaufs des Brennstoffzellensystems 31 eingesetzt wird. Die Seitenkanäle 19, 21 verlaufen derart im Gehäuse 3 in Richtung der Drehachse 4, dass diese axial zur Förderzelle 5 beidseitig verlaufen. Die Seitenkanäle 19, 21 können dabei zumindest in einem Teilbereich des Gehäuses 3 umlaufend um die Drehachse 4 verlaufen, wobei in dem Teilbereich, in dem die Seitenkanäle 19, 21 im Gehäuse 3 nicht ausgebildet ist, ein Unterbrecher-Bereich 15 im Gehäuse 3 ausgebildet ist.

Das Gehäuse 3 weist zudem eine erste und zweite Spaltfläche 32, 34 auf, die jeweils dem Verdichterrad 2 zugewandt sind und die radial zur Drehachse 4 verlaufen. Des Weiteren ist das Gehäuse 3 mehrteilig ausgebildet und weist zumindest ein Gehäuse-Oberteil 7 und ein Gehäuse-Unterteil 8 auf. Dabei ist im Bereich der Spaltflächen 32, 34 jeweils ein erstes und zweites funktionsrelevantes Spaltmaß 36, 38 ausgebildet, insbesondere zwischen dem Gehäuse 3 und dem Verdichterrad 2. Ein erster Spalt 26 bildet sich zudem in Richtung der Drehachse 4 zwischen einer fünften Stirnfläche 48 eines Aufnahme-Deckels 10 und einer sechsten Stirnfläche 50 des Gehäuse-Unterteils 8 aus. Dieser erste Spalt 26 kann seine Breite beim Durchlaufen eines Temperaturbereichs ändern und sorgt zum einen dafür, dass sich keine Spannungen zwischen den metallischen Bauteilen und den Bauteilen aus Kunststoff einstellen, da verhindert wird, dass die beiden Stirnflächen 48, 50 miteinander in Berührung kommen. Zum anderen kann mittels des ersten Spalts 26 verhindert werden, dass sich das jeweilige Spaltmaß 36, 38 beim Durchlaufen eines weiten Temperaturbereichs ändert, indem beispielsweise der Aufnahme-Deckel 10 die Bauteile Verdichterrad 2 und/oder Gehäuse-Oberteil 7 und/oder Gehäuse-Unterteil 8 gegeneinander drückt. Der erste Spalt dient somit als ausgleichendes Element um die unterschiedliche Breitenausdehnung der Bauteile Aufnahme-Deckel 10, Mitnahme-Flansch 20, Gehäuse-Oberteil 7, Gehäuse-Unterteil 8 und Verdichterrad 2 ausgleichen zu können. Zudem sind die Bauteile Gehäuse-Oberteil 7, Gehäuse-Unterteil 8 und Verdichterrad 2 des Seitenkanalverdichters 1 zumindest nahezu vollständig aus Kunststoff hergestellt. Dabei können das Gehäuse-Oberteil 7 und/oder das Gehäuse-Unterteil 8 mittels eines Gießverfahrens hergestellt werden, insbesondere mittels eines Spritzgussverfahrens. Der Antrieb 6 ist dabei als ein Axialfeld-Elektromotor 6 ausgeführt, der einen Stator 11 und einen Rotor 17 aufweist, wobei der Stator 11 und der Rotor 17 scheibenförmig umlaufend um die Drehachse 4 ausgebildet sind und wobei der Stator 11 in Richtung der Drehachse 4 neben dem Rotor 17 angeordnet ist. Weiterhin kann der Rotor 17, als ein Permanentmagnet 17 ausgeführt sein, der in Richtung der Drehachse 4 mit einem Mitnahme-Flansch 20 in Kontakt steht und/oder mit dem Mitnahme-Flansch 20 verbunden ist, insbesondere mittels einer formschlüssigen und/oder kraftschlüssigen und/oder einer stoffschlüssigen Verbindung.

Ein zweiter Spalt 28 bildet sich zudem zwischen einem Außendurchmesser des Verdichterrads 2 und einem Innendurchmesser des Gehäuses 3 radial zur Drehachse 4 aus. Die temperaturbedingte Längenänderung der Bauteile 2, 7, 8, 10, 20 orthogonal zur Drehachse 4 ist als untergeordnet zu betrachten, da der zweite Spalt 28 nicht funktionskritisch ist, insbesondere für eine Kapselung des Verdichterraums, und daher relativ groß dimensioniert werden kann.

In **Fig.** 1 ist weiterhin gezeigt, dass das Gehäuse 3 den Aufnahme-Deckel 10 aufweist, der scheibenförmig umlaufend um die Drehachse 4 ausgeführt und zumindest teilweise aus einem metallischen Werkstoff hergestellt ist und an seinem Außendurchmesser einen um die Drehachse 4 umlaufenden ersten zylindrischen Ansatz 45 aufweist. Dabei steht eine erste Stirnfläche 40 des ersten zylindrischen Ansatzes 45 mit einer zweiten Stirnfläche 42 des Gehäuse-Unterteils 7 in Richtung der Drehachse 4 in Anlage. Zudem weist das Verdichterrad 2 eine um die Drehachse 4 umlaufende Nabenscheibe 23 auf, wobei die Nabenscheibe 23 mit einer dritten Stirnfläche 44 an einer vierten Stirnfläche 46 des Mitnahme-Flansches 20 in Richtung der Drehachse 4 zumindest in Anlage steht und/oder mit diesem verbunden ist, insbesondere mittels einer formschlüssigen und/oder kraftschlüssigen und/oder einer stoffschlüssigen Verbindung Zudem verlaufen die Stirnflächen 40, 42, 44, 46 zumindest nahezu deckungsgleich zueinander und/oder dass die Bauteile Aufnahme-Deckel 10 und Nabenscheibe 23 weisen einen nahezu gleichen Wärmeausdehnungskoeffizienten auf. Die jeweilige Stirnfläche 40, 42, 44, 46, 48 verläuft dabei zumindest nahezu radial und/oder orthogonal umlaufend um die Drehachse 4.

Des Weiteren ist in **Fig.** 1 gezeigt, dass der Aufnahme-Deckel 10 einen zylindrischen Lagerzapfen 12 aufweist, wobei der Lagerzapfen 12 derart in Richtung der Drehachse 4 verläuft, dass seine Mantelfläche umlaufend um die Drehachse 4 verläuft und wobei ein erstes Lager 27 und/oder ein zweites Lager 47 radial zur Drehachse 4 mit der Mantelfläche des Lagerzapfens 12 in Kontakt stehen. Dabei steht eine Lageraußenschale mit dem metallischen Bauteil Mitnahme-Flansch 20 des Seitenkanalverdichters 1 in Anlage und/oder ist mittels einer kraftschlüssigen Verbindung mit diesem verbunden, insbesondere mit einem um die Drehachse 4 umlaufenden zweiten zylindrischen Ansatz 22 des Mitnahme-Flansches 20. Der zweite zylindrische Ansatz 22 des Mitnahmeflanschs 20 weist dabei auf seiner der Drehachse 4 zugewandten Innenfläche eine Innenbohrung 24 auf, die mit der Lageraußenschale in Kontakt steht. Des Weiteren steht eine Lagerinnenschale mit dem metallischen Bauteil Aufnahmedeckel 10, insbesondere dem Lagerzapfen 12, des Seitenkanalverdichters 1 in Anlage und/oder ist mittels einer kraftschlüssigen Verbindung mit diesem verbunden. Weiterhin kann die Nabenscheibe 23 mit ihrem der Drehachse 4 zugewandten Innendurchmesser mit einem Außendurchmesser des Mitnahme-Flansches 20 in Anlage stehen, insbesondere mit dem Außendurchmesser des zweiten zylindrischen Ansatzes 22.

Eine Befestigung der Nabenscheibe 23 und/oder des Verdichterrad 2 am Mitnahme-Flansch 20 kann dabei beispielsweise mittels einer formschlüssigen und/oder kraftschlüssigen Verbindung erzielt werden. Dabei weist der der Drehachse 4 zugewandte Innendurchmesser der Fixierscheibe 13 einen geringeren Durchmesser als der der Drehachse 4 abgewandte Außendurchmesser des zweiten zylindrischen Ansatzes 22, wobei sich eine Übermaßpassung zwischen den Bauteilen ergibt und sich insbesondere ein Pressverband ausbildet. Dabei wird die Nabenscheibe 23 formschlüssig zwischen der Fixierscheibe 13 und dem Mitnahme-Flansch 20 fixiert.

Zudem ist in **Fig.** 1 gezeigt, dass der Seitenkanalverdichter 1 einen Stator-Raum 35 und einem Rotor-Raum 33 aufweist, wobei in diesen Räumen 33, 35 zumindest teilweise Bauteile des Antriebs 6 angeordnet sind. Dabei weist das Gehäuse-Oberteil 7 eine durchgehende Wandung 29 auf, die sich zwischen dem Stator-Raum 35 und dem Rotor-Raum 33 befindet und eine fluidische Trennung dieser bewirkt. Zudem kann sich zum einen ein erstes Dichtelement 37 zwischen dem Aufnahme-Deckel 10 und dem Gehäuse-Unterteil 8, insbesondere im Bereich eines Absatzes 18 des Aufnahme-Deckels 10, befinden. Zum anderen kann sich ein zweites Dichtelement 41 zwischen dem Gehäuse-Oberteil 7, insbesondere einer siebten Stirnfläche 52, und dem Gehäuse-Unterteil 8, insbesondere einer achten Stirnfläche 54, befindet. Die jeweilige Stirnfläche 50, 52, 54 verläuft dabei zumindest nahezu radial und/oder orthogonal umlaufend um die Drehachse 4.

In **Fig.** 1 ist gezeigt, dass ein Statorgehäuse 39 am Gehäuse-Oberteil 7 angebracht ist. Das Statorgehäuse 39 bewirkt eine fluidische Kapselung des Stator-Raums 35 und/oder des Antriebs 6, wobei sich der Stator-Raum 35 in Richtung der Drehachse 4 vorzugsweise zumindest nahezu vollständig im Gehäuse-Oberteil 7 befindet. Des Weiteren ist das Gehäuse-Oberteil 7 an dem Gehäuse-Unterteil 8 und das Gehäuse-Unterteil 8 an dem Aufnahme-Deckel 10 mittels mindestens zweier Verschraubungselemente 49 fixiert.

Zwischen den zumindest teilweise metallischen Bauteilen des Seitenkanalverdichters 1 und den Bauteilen des Seitenkanalverdichters 1, die zumindest teilweise aus Kunststoff bestehen, wird eine Trennlinie 25 ausgebildet, die nahezu orthogonal zur Drehachse 4 verläuft. Dabei ist die Trennlinie 25 als Verlängerung der Kontaktflächen 44, 46 zwischen der Nabenscheibe 23 und dem Mitnahme-Flansch und/oder der Kontaktflächen 40, 42 zwischen dem Gehäuse-Unterteil 8 und dem Aufnahme-Deckel 10 ausgebildet. Bei einer Temperaturänderung des Seitenkanalverdichters 1 dehnen sich nun die zumindest teilweise metallischen Bauteile und die zumindest teilweise aus Kunststoff bestehenden Bauteile unterschiedlich aus, insbesondere aufgrund des unterschiedlichen Wärmeausdehnungskoeffizienten. Dabei ändert sich beispielsweise ein Abstandsmaß 43 zwischen der Trennlinie 25 und eine dem Antrieb 6 abgewandten Oberfläche 51 des Aufnahme-Deckels 10 derart, dass sich dieses metallisches Bauteile bei einer Temperaturerhöhung weniger stark ausdehnt als das Gehäuse-Oberteil 7 und/oder das Gehäuse-Unterteil 8. Indem nun die Fixierung der Bauteile 10, 7, 8 auf der Trennlinie 25 liegt und weitere konstruktive Maßnahmen umgesetzt wurden, wie beispielsweise der erste Spalt 26 zwischen dem Aufnahme-Deckel 10 und dem Gehäuse-Unterteil 8, kann der Vorteil erzielt werden, dass sich, trotz der unterschiedlichen Wärmeausdehnungskoeffizienten und/oder der Größenänderung der Bauteile 7, 8, 10, 20, 27, 47 das erste und/oder zweite funktionsrelevante Spaltmaß 36, 38 zwischen dem Verdichterrad 2 und dem Gehäuse 3, auch bei einem Durchlaufen von sehr niedrigen zu sehr hohen Betriebstemperaturen, insbesondere -30°C bis + 100°C nicht ändert oder sich nahezu nicht ändert. Auf diese Weise lässt sich der Vorteil erzielen, dass es nicht zu einer derartigen Erweiterung der funktionsrelevanten Spaltmaße 36, 38 kommt, dass eine pneumatische Kapselung und/oder Trennung mindestens eines Seitenkanals 19, 21 aufgehoben wird. Zudem wird vermieden, dass sich das funktionsrelevante Spaltmaß 36, 38 derart verkleinert, dass es zu einer Kollision zwischen dem Gehäuse 3 und dem Verdichterrad 2 kommt, was zu einem Ausfall des Seitenkanalverdichters 1 führt. Somit lässt sich die Zuverlässigkeit und/oder der Wirkungsgrad des Seitenkanalverdichters 1 erhöhen oder zumindest beibehalten, auch beim Durchlaufen eines weiten Temperaturbereichs. Die metallischen Bauteile, wie beispielsweise der Aufnahme-Deckel 10 und das Statorgehäuse 39 sind zudem derart am Seitenkanalverdichter 1 angeordnet, dass diese aufgrund Ihrer hohen Festigkeit den Seitenkanalverdichter 1 gegen Stöße und Schläge und Umwelteinflüsse schützt und für eine hohe Strukturfestigkeit und Steifigkeit des Gehäuses 3 und/oder des Seitenkanalverdichters 1 sorgt, wodurch sich eine höhere Lebensdauer und/oder Zuverlässigkeit des Seitenkanalverdichters 1 ergibt.

Gemäß einer weiteren erfindungsgemäße Ausgestaltung des Seitenkanalverdichters 1 kann der Stator 11 als ein Permanentmagnet 11 ausgebildet sein. Dabei wird der Rotor 17 entweder nur bei einer Bestromung des Stators 11 in Richtung der Drehachse 4, insbesondere mittels einer Axialkraft 9, bewegt. Alternativ kann auch eine dauerhafte und permanente Axialkraft 9 auf den Rotor 17 wirken, insbesondere auch bei einer abgeschalteten Bestromung des Stators 11, insbesondere mittels einer Magnetkraft. Dabei wird zumindest ein Lager 27, 47 mit einer axialen Vorspannung beaufschlagt, wodurch das Rillenkugellager 27 als Axiallager und/oder als Radiallager dient. Dabei kann der Vorteil erzielt werden, dass nur ein Lager 27, 47 verwendet werden muss, dass beide Funktionen des Axiallagers und des Radiallagers abdeckt. Aufgrund des zumindest nahezu identischen Wärmeausdehnungskoeffizienten des Aufnahme-Deckels 10 und des Mitnahme-Flansches 20 kann entweder das erste Lager 27 oder das zweite Lager 47 als Festlager bestimmt werden, um der auf den Mitnahmeflansch 20, insbesondere über den Rotor 17, wirkenden Axialkraft 9 entgegenzuwirken, so dass sich das Verdichterrad nicht in Richtung der Drehachse 4 bewegen kann.

Indem zumindest die Bauteile Gehäuse-Oberteil 7, Gehäuse-Unterteil 8 und das Verdichterrad 2 zumindest teilweise aus einem Kunststoff hergestellt sind, kann ein Festfrieren des Verdichterrads 2 am Gehäuse-Oberteil 7 und/oder am Gehäuse-Unterteil 8 verhindert werden, insbesondere bei langen Standzeiten des Seitenkanalverdichters 1 und/oder des Gesamtfahrzeugs bei niedrigen Temperaturen unter 0°C.

## Patentansprüche

1. Seitenkanalverdichter (1) für ein Brennstoffzellensystem (31) zur Förderung und/oder Verdichtung eines gasförmigen Mediums, insbesondere Wasserstoff, mit einem Gehäuse (3), mit einem in dem Gehäuse (3) befindlichen Verdichterrad (2), das drehbar um eine Drehachse (4) angeordnet und zumindest mittelbar durch einen Antrieb (6) angetrieben ist, wobei das Verdichterrad (2) an seinem Umfang im Bereich eines Verdichterraums (30) angeordnete Förderzellen (5) aufweist, und mit jeweils einer am Gehäuse (3) ausgebildeten Gas-Einlassöffnung (14) und einer Gas-Auslassöffnung (16), die über den Verdichterraum (30), insbesondere dem mindestens einen Seitenkanal (19, 21), fluidisch miteinander verbunden sind, wobei das Gehäuse (3) eine erste und zweite Spaltfläche (32, 34) jeweils dem Verdichterrad (2) zugewandt und radial zur Drehachse (4) verlaufend aufweist und wobei sich im Bereich der Spaltflächen (32, 34) jeweils ein erstes und zweites funktionsrelevantes Spaltmaß (36, 38) zwischen dem Gehäuse (3) und dem Verdichterrad (2) ausbildet, wobei das Gehäuse (3) mehrteilig ausgebildet ist und zumindest ein Gehäuse-Oberteil (7) und ein Gehäuse-Unterteil (8) aufweist, wobei das Gehäuse-Oberteil (7), das Gehäuse-Unterteil (8) und das Verdichterrad (2) zumindest nahezu vollständig aus Kunststoff hergestellt sind, **dadurch gekennzeichnet, dass** das Gehäuse (3) einen Aufnahme-Deckel (10) aufweist, der scheibenförmig umlaufend um die Drehachse (4) ausgeführt und aus einem metallischen Werkstoff hergestellt ist und an seinem Außendurchmesser einen um die Drehachse (4) umlaufenden ersten zylindrischen Ansatz (45) aufweist, wobei der erste zylindrische Ansatz (45) mit einer ersten Stirnfläche (40) mit einer zweiten Stirnfläche (42) des Gehäuse-Unterteils (8) in Richtung der Drehachse (4) in Anlage steht.

2. Seitenkanalverdichter (1) gemäß Anspruch 1, **dadurch gekennzeichnet, dass** das Verdichterrad (2) eine um die Drehachse (4) umlaufende Nabenscheibe (23) aufweist, wobei die Nabenscheibe (23) mit einer dritten Stirnfläche (44) an einer vierten Stirnfläche (46) eines Mitnahme-Flansches (20), der insbesondere nahezu vollständig aus einem metallischen Werkstoff besteht, in Richtung der Drehachse (4) zumindest in Anlage steht und/oder mit diesem verbunden ist, insbesondere mittels einer formschlüssigen und/oder kraftschlüssigen und/oder einer stoffschlüssigen Verbindung.

3. Seitenkanalverdichter (1) gemäß Anspruch 2, **dadurch gekennzeichnet, dass** die Stirnflächen (40, 42, 44, 46) zumindest nahezu deckungsgleich zueinander verlaufen und/oder dass die Bauteile Aufnahme-Deckel (10) und Mitnahme-Flansch (20) und/oder weitere metallische Bauteile einen nahezu gleichen Wärme-ausdehnungskoeffizienten aufweisen.

4. Seitenkanalverdichter (1) gemäß Anspruch 1 bis 3, **dadurch gekennzeichnet, dass** der Aufnahme-Deckel (10) einen zylindrischen Lagerzapfen (12) aufweist, wobei der Lagerzapfen (12) derart in Richtung der Drehachse (4) verläuft, dass seine Mantelfläche umlaufend um die Drehachse (4) verläuft und wobei ein erstes Lager (27) und/oder ein zweites Lager (47) radial zur Drehachse (4) mit der Mantelfläche des Lagerzapfens (12) in Kontakt stehen.

5. Seitenkanalverdichter (1) gemäß einem der vorstehenden Ansprüche, **dadurch gekennzeichnet, dass** der Antrieb (6) als ein Axialfeld-Elektromotor (6) ausgeführt ist, der einen Stator (11) und einen Rotor (17) aufweist, wobei der Stator (11) und der Rotor (17) scheibenförmig umlaufend um die Drehachse (4) ausgebildet sind und wobei der Stator (11) in Richtung der Drehachse (4) neben dem Rotor (17) angeordnet ist.

6. Seitenkanalverdichter (1) gemäß Anspruch 5, **dadurch gekennzeichnet, dass** der Rotor (17), als ein Permanentmagnet (17) ausgeführt ist, der in Richtung der Drehachse (4) mit einem Mitnahme-Flansch (20) in Kontakt steht und/oder mit dem Mitnahme-Flansch (20) verbunden ist, insbesondere mittels einer formschlüssigen und/oder kraftschlüssigen und/oder einer stoffschlüssigen Verbindung.

7. Seitenkanalverdichter (1) gemäß Anspruch 1 bis 6, **dadurch gekennzeichnet, dass** ein erster Spalt (26) in Richtung der Drehachse (4) zwischen einer fünften Stirnfläche (48) des Aufnahme-Deckels (10) und einer sechsten Stirnfläche (50) des Gehäuse-Unterteils (8) verläuft.

8. Seitenkanalverdichter (1) gemäß Anspruch 5, **dadurch gekennzeichnet, dass** das Gehäuse-Oberteil (7) eine durchgehende Wandung (29) aufweist, die sich zwischen einem Stator-Raum (35) und einem Rotor-Raum (33) befindet und eine fluidische Trennung dieser bewirkt.

9. Seitenkanalverdichter (1) gemäß Anspruch 1 bis 8, **dadurch gekennzeichnet, dass** sich ein erstes Dichtelement (37) zwischen dem Aufnahme-Deckel (10) und dem Gehäuse-Unterteil (8), insbesondere im Bereich eines Absatzes (18) des Aufnahme-Deckels (10), befindet und/oder sich ein zweites Dichtelement (41) zwischen dem Gehäuse-Oberteil (7), insbesondere einer siebten Stirnfläche (52), und dem Gehäuse-Unterteil (8), insbesondere einer achten Stirnfläche (54), befindet.

10. Seitenkanalverdichter (1) gemäß Anspruch 8, **dadurch gekennzeichnet, dass** ein Statorgehäuse (39) am Gehäuse-Oberteil (7) angebracht ist, das eine fluidische Kapselung des Stator-Raums (35) des Antriebs (6) bewirkt, wobei sich der Stator-Raum (35) in Richtung der Drehachse (4) vorzugsweise zumindest nahezu vollständig im Gehäuse-Oberteil (7) befindet.

11. Seitenkanalverdichter (1) gemäß Anspruch 1 bis 10, **dadurch gekennzeichnet, dass** mindestens zwei Verschraubungselemente (49) das Gehäuse-Oberteil (7) an dem Gehäuse-Unterteil (8) und das Gehäuse-Unterteil (8) an dem Aufnahme-Deckel (10) fixieren.

12. Seitenkanalverdichter (1) gemäß einem der vorrangegangenen Ansprüche, **dadurch gekennzeichnet, dass** das Gehäuse-Oberteil (7) und/oder das Gehäuse-Unterteil (8) mittels eines Gießverfahrens hergestellt werden, insbesondere mittels eines Spritzgussverfahrens.

## Claims

1. Side-channel compressor (1) for a fuel cell system (31) for conveying and/or compressing a gaseous medium, in particular hydrogen, having a housing (3), having a compressor impeller (2) which is situated in the housing (3), is arranged so as to be rotatable about an axis of rotation (4) and is driven at least indirectly by a drive (6), wherein the compressor impeller (2) has conveying cells (5) arranged at its circumference in the region of a compressor chamber (30), and having in each case a gas inlet opening (14) and a gas outlet opening (16) formed on the housing (3), which openings are fluidically connected to one another via the compressor chamber (30), in particular via the at least one side channel (19, 21), wherein the housing (3) has a first and second gap area (32, 34), each facing the compressor impeller (2) and extending radially with respect to the axis of rotation (4), and wherein in each case a first and second functionally relevant gap dimension (36, 38) are formed in the region of the gap areas (32, 34) between the housing (3) and the compressor impeller (2), wherein the housing (3) is of multi-part design and has at least a housing upper part (7) and a housing lower part (8), wherein the housing upper part (7), the housing lower part (8) and the compressor impeller (2) are made at least almost completely of plastic, **characterized in that** the housing (3) has a receiving cover (10) which is configured to extend in the form of a disc around the axis of rotation (4) and is made of a metallic material and has at its outside diameter a first cylindrical projection (45) extending around the axis of rotation (4), wherein the first cylindrical projection (45) bears by way of a first end face (40) against a second end face (42) of the housing lower part (8) in the direction of the axis of rotation (4) .

2. Side-channel compressor (1) according to Claim 1, **characterized in that** the compressor impeller (2) has a hub disc (23) extending around the axis of rotation (4), wherein the hub disc (23) at least bears by way of a third end face (44) against a fourth end face (46) of a driver flange (20), which in particular consists almost completely of a metallic material, in the direction of the axis of rotation (4) and/or is connected thereto, in particular by means of a form-fitting and/or force-fitting and/or integrally bonded connection.

3. Side-channel compressor (1) according to Claim 2, **characterized in that** the end faces (40, 42, 44, 46) extend at least almost congruently to one another and/or in that the components consisting of receiving cover (10) and driver flange (20) and/or further metallic components have an almost identical coefficient of thermal expansion.

4. Side-channel compressor (1) according to Claims 1 to 3, **characterized in that** the receiving cover (10) has a cylindrical bearing journal (12), wherein the bearing journal (12) extends in the direction of the axis of rotation (4) in such a way that its lateral surface extends around the axis of rotation (4), and wherein a first bearing (27) and/or a second bearing (47) are/is in contact with the lateral surface of the bearing journal (12) radially with respect to the axis of rotation (4).

5. Side-channel compressor (1) according to one of the preceding claims, **characterized in that** the drive (6) is configured as an axial field electric motor (6) which has a stator (11) and a rotor (17), wherein the stator (11) and the rotor (17) are designed to extend in the form of a disc around the axis of rotation (4), and wherein the stator (11) is arranged next to the rotor (17) in the direction of the axis of rotation (4).

6. Side-channel compressor (1) according to Claim 5, **characterized in that** the rotor (17) is configured as a permanent magnet (17) which is in contact with a driver flange (20) in the direction of the axis of rotation (4) and/or is connected to the driver flange (20), in particular by means of a form-fitting and/or force-fitting and/or integrally bonded connection.

7. Side-channel compressor (1) according to Claims 1 to 6, **characterized in that** a first gap (26) extends between a fifth end face (48) of the receiving cover (10) and a sixth end face (50) of the housing lower part (8) in the direction of the axis of rotation (4).

8. Side-channel compressor (1) according to Claim 5, **characterized in that** the housing upper part (7) has a continuous wall (29) which is situated between a stator chamber (35) and a rotor chamber (33) and fluidically separates them.

9. Side-channel compressor (1) according to Claims 1 to 8, **characterized in that** a first sealing element (37) is situated between the receiving cover (10) and the housing lower part (8), in particular in the region of a shoulder (18) of the receiving cover (10), and/or a second sealing element (41) is situated between the housing upper part (7), in particular a seventh end face (52), and the housing lower part (8), in particular an eighth end face (54).

10. Side-channel compressor (1) according to Claim 8, **characterized in that** a stator housing (39) is mounted on the housing upper part (7) and fluidicaly encapsulates the stator chamber (35) of the drive (6), wherein the stator chamber (35) is preferably situated at least almost completely in the housing upper part (7) in the direction of the axis of rotation (4).

11. Side-channel compressor (1) according to Claims 1 to 10, **characterized in that** at least two screwing elements (49) fix the housing upper part (7) to the housing lower part (8) and the housing lower part (8) to the receiving cover (10).

12. Side-channel compressor (1) according to one of the preceding claims, **characterized in that** the housing upper part (7) and/or the housing lower part (8) are/is produced by means of a moulding method, in particular by means of an injection moulding method.

## Revendications

1. Compresseur à canal latéral (1) pour un système de piles à combustible (31) pour le transport et/ou la compression d'un milieu gazeux, en particulier de l'hydrogène, avec un boîtier (3), avec une roue de compresseur (2) se trouvant dans le boîtier (3), qui est agencée de manière à être apte à tourner autour d'un axe de rotation (4) et qui est entraînée au moins indirectement par un entraînement (6), la roue de compresseur (2) présentant sur sa périphérie des cellules de transport (5) disposées dans la zone d'une chambre de compresseur (30), et comprenant chacune une ouverture d'entrée de gaz (14) et une ouverture de sortie de gaz (16) formées sur le boîtier (3), qui sont reliées fluidiquement l'une à l'autre par l'intermédiaire de l'espace de compression (30), en particulier par l'au moins un canal latéral (19, 21), le boîtier (3) présentant une première et une deuxième surface d'interstice (32, 34) tournées chacune vers la roue de compresseur (2) et s'étendant radialement par rapport à l'axe de rotation (4), et, dans la zone des surfaces d'interstice (32, 34), un premier et un deuxième interstices (36, 38) fonctionnellement pertinents étant formés, respectivement entre le boîtier (3) et la roue de compresseur (2), le boîtier (3) étant réalisé en plusieurs parties et présentant au moins une partie supérieure (7) de boîtier et une partie inférieure (8) de boîtier, la partie supérieure (7) de boîtier, la partie inférieure (8) de boîtier et la roue de compresseur (2) étant constituées au moins presque entièrement de matière plastique, **caractérisé en ce que** le boîtier (3) présente un couvercle de réception (10) qui est réalisé en forme de disque autour de l'axe de rotation (4) et est constitué en un matériau métallique et présente sur son diamètre extérieur un premier appendice cylindrique (45) s'étendant autour l'axe de rotation (4), le premier appendice cylindrique (45) étant en appui par une première surface d'extrémité (40) contre une deuxième surface d'extrémité (42) de la partie inférieure (8) de boîtier dans la direction de l'axe de rotation (4).

2. Compresseur à canal latéral (1) selon la revendication 1, **caractérisé en ce que** la roue de compresseur (2) présente un disque de moyeu (23) tournant autour de l'axe de rotation (4), le disque de moyeu (23) étant au moins en contact par une troisième surface d'extrémité (44) avec une quatrième surface d'extrémité (46) d'une bride d'entraînement (20), qui est en particulier constituée presque entièrement d'un matériau métallique, en direction de l'axe de rotation (4) et/ou étant relié à celle-ci, en particulier au moyen d'une liaison par complémentarité de forme et/ou d'une liaison par engagement en force et/ou d'une liaison par matière.

3. Compresseur à canal latéral (1) selon la revendication 2, **caractérisé en ce que** les surfaces d'extrémité (40, 42, 44, 46) s'étendent au moins pratiquement entièrement de manière congruente les unes avec les autres et/ou **en ce que** les composants couvercle de réception (10) et bride d'entraînement (20), et/ou d'autres composants métalliques, présentent un coefficient de dilatation thermique pratiquement identique.

4. Compresseur à canal latéral (1) selon les revendications 1 à 3, **caractérisé en ce que** le couvercle de réception (10) présente un tourillon cylindrique (12), le tourillon (12) s'étendant dans la direction de l'axe de rotation (4) de telle sorte que sa surface d'enveloppe s'étend circonférentiellement autour de l'axe de rotation (4), et un premier roulement (27) et/ou un deuxième roulement (47) est en contact, radialement par rapport à l'axe de rotation (4), avec la surface d'enveloppe du tourillon (12).

5. Compresseur à canal latéral (1) selon l'une des revendications précédentes, **caractérisé en ce que** l'entraînement (6) est réalisé sous la forme d'un moteur électrique à champ axial (6), qui présente un stator (11) et un rotor (17), le stator (11) et le rotor (17) étant réalisés en forme de disque tournant autour de l'axe de rotation (4) et le stator (11) étant agencé à côté du rotor (17) dans la direction de l'axe de rotation (4).

6. Compresseur à canal latéral (1) selon la revendication 5, **caractérisé en ce que** le rotor (17) est réalisé sous la forme d'un aimant permanent (17) qui est en contact avec une bride d'entraînement (20) dans la direction de l'axe de rotation (4) et/ou qui est relié à la bride d'entraînement (20), en particulier au moyen d'une liaison par complémentarité de forme et/ou d'une liaison par engagement en force et/ou d'une liaison par matière.

7. Compresseur à canal latéral (1) selon les revendications 1 à 6, **caractérisé en ce qu'**un premier interstice (26) s'étend dans la direction de l'axe de rotation (4) entre une cinquième surface d'extrémité (48) du couvercle de réception (10) et une sixième surface d'extrémité (50) de la partie inférieure (8) de boîtier.

8. Compresseur à canal latéral (1) selon la revendication 5, **caractérisé en ce que** la partie supérieure (7) de boîtier présente une paroi continue (29) qui est située entre un espace de stator (35) et un espace de rotor (33) et qui assure une séparation fluidique de ceux-ci.

9. Compresseur à canal latéral (1) selon les revendications 1 à 8, **caractérisé en ce qu'**un premier élément d'étanchéité (37) se trouve entre le couvercle de logement (10) et la partie inférieure (8) de boîtier, en particulier dans la zone d'un épaulement (18) du couvercle de logement (10), et/ou un deuxième élément d'étanchéité (41) se trouve entre la partie supérieure (7) de boîtier, en particulier une septième surface d'extrémité (52), et la partie inférieure (8) de boîtier, en particulier une huitième surface d'extrémité (54).

10. Compresseur à canal latéral (1) selon la revendication 8, **caractérisé en ce qu**'un boîtier de stator (39) est monté sur la partie supérieure (7) de boîtier, lequel assure un encapsulage fluidique de l'espace de stator (35) de l'entraînement (6), l'espace de stator (35) se trouvant de préférence au moins presque entièrement dans la partie supérieure (7) de boîtier en direction de l'axe de rotation (4).

11. Compresseur à canal latéral (1) selon les revendications 1 à 10, **caractérisé en ce qu'**au moins deux éléments de vissage (49) fixent la partie supérieure (7) de boîtier sur la partie inférieure (8) de boîtier et la partie inférieure (8) de boîtier sur le couvercle de réception (10).

12. Compresseur à canal latéral (1) selon l'une des revendications précédentes, **caractérisé en ce que** la partie supérieure (7) de boîtier et/ou la partie inférieure (8) de boîtier sont fabriquées au moyen d'un procédé de coulée, en particulier au moyen d'un procédé de moulage par injection.
